(19) Europäisches Patentamt / European Patent Office / Office européen des brevets

(11) **EP 4 203 490 A1**

(12) **DEMANDE DE BREVET EUROPEEN**

(43) Date de publication:
**28.06.2023 Bulletin 2023/26**

(21) Numéro de dépôt: **22215273.8**

(22) Date de dépôt: **21.12.2022**

(51) Classification Internationale des Brevets (IPC):
**H04N 25/00** *(2023.01)*  **H04N 25/707** *(2023.01)*

(52) Classification Coopérative des Brevets (CPC):
**H04N 25/00; H04N 25/707**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **21.12.2021 FR 2114138**

(71) Demandeur: **Commissariat à l'énergie atomique et aux énergies alternatives**
**75015 Paris (FR)**

(72) Inventeurs:
• **BOUVIER, Maxence**
  **38054 GRENOBLE (FR)**
• **VALENTIAN, Alexandre**
  **38054 GRENOBLE (FR)**

(74) Mandataire: **Lavoix**
**2, place d'Estienne d'Orves**
**75441 Paris Cedex 09 (FR)**

(54) **SYSTÈME D OBSERVATION ET PROCÉDÉ D OBSERVATION ASSOCIÉ**

(57) La présente invention concerne un système d'observation (10) d'un environnement, le système d'observation (10) comprenant :
- un détecteur (12) formant un flux synchrone de trames,
- une première chaîne de traitement (14) comportant :
- une première unité de réception (30) recevant le flux synchrone formé, et
- une première unité de traitement (32) comprenant un premier bloc de conversion (34) convertissant le flux synchrone en données événementielles, et un premier bloc de calcul (36) calculant des premières données à partir des données événementielles,

- une deuxième chaîne de traitement (16) comportant une deuxième unité de traitement (46) recevant un flux synchrone de trames issu de la matrice (18) et les premières données et obtenant des deuxièmes données relatives à l'environnement en fonction du flux synchrone et des premières données.

EP 4 203 490 A1

**Description**

La présente invention concerne un système d'observation et un procédé associé.

Dans le domaine de la vision, il est courant de distinguer les imageurs traditionnels des capteurs événementiels.

Les imageurs traditionnels fournissent des images, à savoir une succession de matrices qui codent des valeurs d'intensités lumineuses mesurées par une grille de pixels à une fréquence régulière.

Les valeurs d'intensités lumineuses sont souvent des valeurs comprises entre 0 et 255, voire plus avec les écrans les plus récents et le plus souvent sur 3 (ou 4) canaux, à savoir rouge, vert, bleu (et éventuellement « luminance »).

Les imageurs traditionnels présentent une information relativement dense, ce qui permet d'obtenir des informations relativement précises sur la scène image comme des informations de reconnaissance d'objets avec une précision encore inégalée.

Toutefois, les imageurs traditionnels présentent plusieurs inconvénients.

Ces imageurs sont sujets au flou de mouvement. De fait, chaque pixel d'une caméra classique intègre temporellement le flux lumineux qu'il reçoit et lorsque l'imageur se déplace, de nombreuses sources de lumière sont intégrées au niveau d'un même pixel et l'image résultante peut sembler floue, d'autant plus que le mouvement est important.

En outre, la plage de valeurs d'intensité lumineuse pouvant être mesurée par un tel imageur est souvent limitée, sauf à avoir des systèmes adaptatifs ou intrinsèquement à « plage large » couteux. En effet, la charge intégrée dans chaque pixel est généralement convertie en valeurs numériques avec un convertisseur analogique-numérique (aussi dénommé ADC, l'abréviation renvoyant à la terminologie anglaise correspondante de « Analog to Digital Converter ») partagé par plusieurs pixels. De ce fait, en présence d'une grande variation de lumière dans un groupe de pixels (cas d'un objet reflétant le soleil), des phénomènes de saturations peuvent apparaître. En outre, les imageurs capables de fonctionner avec une grande dynamique ont généralement un temps de conversion plus long que ceux de plus faible dynamique, un encombrement spatial supérieur, et un coût supérieur.

Par ailleurs, les données issues d'un imageur traditionnel sont relativement importantes et génèrent une forte charge calculatoire. De ce fait, pour un système embarqué, une forte latence peut apparaître du fait du temps nécessaire pour effectuer le calcul. Ceci peut être problématique dans les situations nécessitant une compréhension rapide de la scène comme un piéton apparaissant devant un véhicule.

Enfin, il peut être noté que la charge calculatoire précitée est parfois inutile à cause de la forte redondance des données issues d'un imageur traditionnel. De fait, même si tous les objets d'une scène sont totalement immobiles, l'imageur traditionnel continue d'acquérir des images au même rythme que si les objets bougent.

La deuxième voie correspond au domaine des capteurs événementiels.

Un capteur DVS ou un capteur ATIS sont deux exemples d'un tel capteur. L'abréviation DVS renvoie à la dénomination anglaise de « *Dynamic Vision Sensor* » qui signifie littéralement capteur de vision dynamique, alors que l'acronyme ATIS renvoie à la dénomination anglaise de « *Asynchronous Time-based Image Sensor* » qui signifie littéralement capteur asynchrone d'image basée sur le temps.

Un capteur événementiel génère un flux d'événements asynchrone et peu dense puisqu'un pixel génère un événement uniquement lorsqu'un gradient temporel d'intensité sur le pixel dépasse un certain seuil.

Un capteur événementiel permet donc qu'aucune donnée ne soit émise lorsque rien ne bouge devant le capteur événementiel, ce qui limite fortement le nombre de données à traiter.

Un capteur événementiel peut fonctionner avec des conditions de luminosité très différentes (notamment de jour comme de nuit) et présente une bonne capacité de détection de mouvements avec une amplitude pouvant être relativement faible, selon les réglages (valeur de seuil).

En outre, du fait du fonctionnement asynchrone, de tels capteurs permettent de détecter sans délai des événements fugaces ou très rapides, qui seraient invisibles pour un capteur d'image classique. Ils permettent donc d'envisager des détections de mouvement à très faible latence. Ils présentent également la caractéristique d'effectuer une extraction de contours intrinsèque des objets en mouvement, y compris d'objet visuellement mal défini (clair sur fond clair, ou sombre sur fond sombre), permettant de renforcer les algorithmes de détection et de classification utilisés avec les imageurs classiques.

A l'inverse, ce comportement asynchrone, fortement lié aux mouvements devant le capteur, présente des inconvénients. Le premier est le très grand nombre d'événements générés lorsque toute la scène bouge (par exemple lorsque c'est le capteur lui-même qui est en mouvement). Pour certains capteurs, le taux d'événements générés peut s'élever jusqu'à 10 GeV/s (GeV/s signifie « Giga Evénements par seconde » et représente le nombre de milliards d'événements par secondes contenus dans un flux d'évènements). Une telle fréquence d'acquisition implique en retour une puissance de calcul importante si on veut faire des traitements complexes pour pouvoir traiter les événements du flux d'événements.

Le deuxième inconvénient est que le nombre d'événements générés par seconde n'est pas prédictible. La charge de calcul ne l'est pas non plus, de sorte qu'il est difficile de traiter les données avec une efficacité maximale (qui est souvent obtenue lors que le traitement est mis en oeuvre avec une charge maximale).

En outre, du fait du bruit intrinsèque des pixels asynchrones, un capteur événementiel génère des événements parasites, ce qui augmente encore inutilement la charge de calcul.

Il existe donc un besoin pour un système d'observation permettant de bénéficier des avantages des deux types d'imageurs précités, tout en restant compatible avec une implémentation physique dans un système embarqué.

A cet effet, la description décrit un système d'observation d'un environnement, le système d'observation comprenant un détecteur comportant une matrice de pixels, chaque pixel étant un capteur propre à acquérir l'intensité de la lumière incidente lors d'une observation de l'environnement, et une unité de lecture, l'unité de lecture étant propre à lire les valeurs d'intensité des pixels pour former un flux synchrone de trames, le système d'observation comprenant également une première chaîne de traitement comportant une première unité de réception propre à recevoir le flux synchrone du détecteur, et une première unité de traitement comprenant un premier bloc de conversion propre à convertir le flux synchrone reçu par la première unité de réception en données événementielles, et un premier bloc de calcul propre à calculer des premières données à partir des données événementielles, le système d'observation comprenant également une deuxième chaîne de traitement distincte de la première chaîne de traitement et comportant une deuxième unité de traitement propre à recevoir un flux synchrone de trames issu de la matrice de pixels et les premières données et à obtenir des deuxièmes données relatives à l'environnement en fonction du flux synchrone et des premières données.

Dans le cadre de la présente invention, on vise notamment à faire des traitements non complexes pour limiter la puissance de calcul requise sur les événements du flux d'événements. L'invention permet néanmoins d'obtenir les résultats des traitements complexes en bénéficiant des avantages de chacune des voies d'imagerie. L'imageur événementiel permet de détecter très rapidement un mouvement, pour réagir avec une faible latence (ce que l'on pourra appeler voie « où ») ; l'imageur classique, avec sa richesse en terme de couleur et de texture, permet de classifier plus aisément (ce que l'on pourra appeler la voie « quoi »).

Selon des modes de réalisation particuliers, le système d'observation présente une ou plusieurs des caractéristiques suivantes, prise(s) isolément ou selon toutes les combinaisons techniquement possibles :

- l'unité de lecture présente une première fréquence d'acquisition pour la première chaîne de traitement et une deuxième fréquence d'acquisition pour la deuxième chaîne de traitement, le rapport entre la première fréquence d'acquisition et la deuxième fréquence d'acquisition étant strictement supérieur à 1, de préférence strictement supérieur à 10.

- la première unité de traitement est propre à émettre les premières données à une première fréquence d'émission, la deuxième unité de traitement est propre à émettre les deuxièmes données à une deuxième fréquence d'émission, le rapport entre la première fréquence d'émission et la deuxième fréquence d'émission étant strictement supérieur à 1, de préférence strictement supérieur à 10.

- l'unité de lecture présente une fréquence d'acquisition réglable.

- l'unité de lecture présente des convertisseurs analogiques-numériques présentant une précision réglable.

- les premières données sont des données relatives à l'évolution temporelle d'un objet de la scène.

- la première unité de traitement comporte une sous-unité de compensation, la sous-unité de compensation étant propre à recevoir des données relatives au mouvement du détecteur et propre à appliquer une technique de compensation aux données événementielles convertis par le premier bloc de conversion en fonction des données reçues pour obtenir un flux d'événements compensés, la première unité de traitement comportant également une sous-unité de reconstruction de trames, la sous-unité de reconstruction étant propre à générer des trames corrigées à partir du flux d'événements compensés, les premières données comportant les trames corrigées.

- la première unité de traitement comporte, en outre, une sous-unité d'obtention, la sous-unité d'obtention étant propre à obtenir au moins une caractéristique relative à la nature du mouvement d'un objet dans la scène, les premières données comportant l'au moins une caractéristique obtenue.

- les deuxièmes données sont des données de reconnaissance ou d'identification d'un objet de la scène.

- la deuxième unité de traitement est propre à appliquer une technique d'évaluation aux premières et aux deuxièmes données pour obtenir des positions évaluées du détecteur.

- la technique d'évaluation est une technique d'odométrie visuelle ou une technique de localisation et de cartographie simultanée.

- la deuxième unité de traitement est propre à effectuer des prétraitements sur le flux synchrone.

- le premier bloc de calcul effectue des prétraitements sur le flux synchrone pour obtenir un flux synchrone corrigé, les prétraitements pouvant notamment utiliser des premières données, la deuxième unité de traitement étant propre à recevoir le flux synchrone corrigé.

- la première unité de traitement comporte un ensemble de coeurs, chaque coeur étant associé à un ensemble de pixels respectifs et appliquant des traitements identiques sur ledit ensemble de pixels.

- le détecteur, la première unité de traitement et la deuxième unité de traitement font partie d'un même composant comportant un empilement d'au moins trois couches, la première couche de l'empilement comportant le détecteur, la deuxième couche de l'empilement comportant la première unité de traitement et la troisième couche comportant la deuxième unité de traitement, la deuxième couche étant reliée à la première couche et à la troisième couche par des liaisons tridimensionnelles respectives.

La description décrit également un procédé d'observation d'un environnement, le procédé d'observation étant mis en oeuvre par un système d'observation, le système d'observation comprenant un détecteur comprenant une matrice de pixels et une unité de lecture, une première chaîne de traitement comportant une première unité de réception et une première unité de traitement comprenant un premier bloc de conversion et un premier bloc de calcul et une deuxième chaîne de traitement distincte de la première chaîne de traitement et comportant une deuxième unité de traitement, le procédé d'observation comprenant les étapes d'acquisition par chaque pixel de l'intensité de la lumière incidente sur le pixel lors d'une observation de l'environnement, de lecture des valeurs d'intensité des pixels par l'unité de lecture pour former un flux synchrone de trames, de réception par la première unité de réception du flux synchrone du détecteur, de conversion du flux synchrone reçu par le premier bloc de conversion en données événementielles, de calcul des premières données à partir des données événementielles par le premier bloc de calcul, de réception par la deuxième unité de traitement du flux synchrone du détecteur et des premières données, et d'obtention de deuxièmes données relatives à l'environnement en fonction des données reçues par la deuxième unité de traitement.

Des caractéristiques et avantages de l'invention apparaîtront à la lecture de la description qui va suivre, donnée uniquement à titre d'exemple non limitatif, et faite en référence aux dessins annexés, sur lesquels :

- [Fig 1] la figure 1 est une représentation schématique d'un exemple de système d'observation comportant des chaînes de traitement,
- [Fig 2] la figure 2 est une représentation schématique d'un exemple de chaîne de traitement, et
- [Fig 3] la figure 3 est une représentation schématique d'un exemple d'implémentation physique d'un système d'observation de la figure 1.

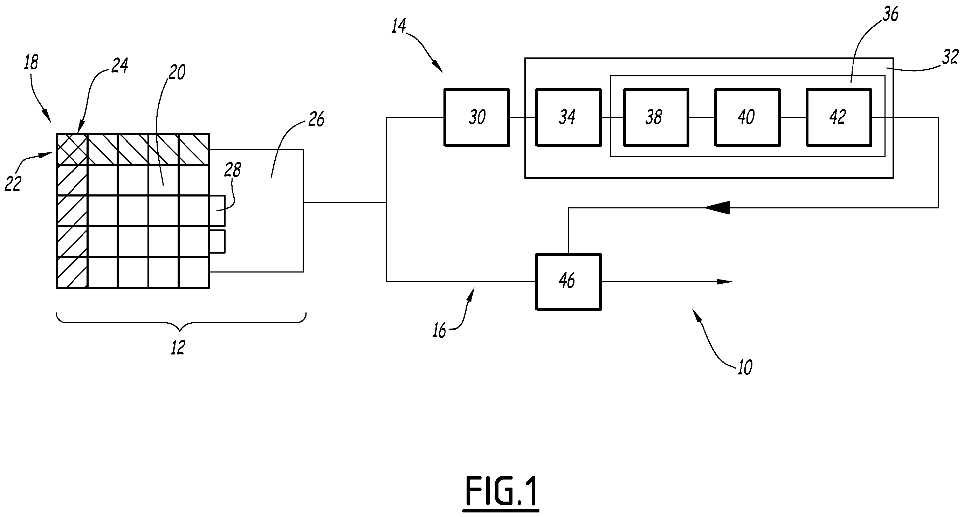

Un système d'observation 10 est représenté sur la figure 1.

La représentation est schématique dans la mesure où il s'agit d'une représentation de type fonctionnelle par bloc permettant de bien appréhender le fonctionnement du système d'observation 10.

Le système d'observation 10 est propre à observer une scène correspondant à un environnement.

Le système d'observation 10 comporte un détecteur 12, une première chaîne de traitement 14 et une deuxième chaîne de traitement 16.

Il peut être souligné ici que ces trois éléments sont distincts de sorte que le système d'observation 10 comporte 3 blocs ayant un rôle spécifique.

De manière très schématique, le détecteur 12 sert à acquérir des images, la première unité de traitement 14 sert à effectuer des traitements sur des données de type événementiel et la deuxième unité de traitement 16 sert à effectuer des traitements sur des données correspondant à des images classiques.

En outre, la deuxième chaîne de traitement 16 est distincte de la première chaîne de traitement 14.

La deuxième chaîne de traitement 16 effectue des traitements en parallèle de la première chaîne de traitement 14.

Les deux chaînes de traitement 14 et 16 effectuent donc simultanément des traitements sur des données issues du détecteur 12.

Les rôles de chacun des blocs sont décrits plus précisément dans ce qui suit.

Le système d'observation 10 est propre à interagir avec une unité de mesure, par exemple intégrée au système d'observation 10.

L'unité de mesure est une unité de mesure de mouvement.

L'unité de mesure est propre à mesurer le mouvement du détecteur 12.

Selon l'exemple proposé, l'unité de mesure est une centrale inertielle.

Une telle centrale inertielle est parfois appelée centrale à inertie ou plus souvent sous l'abréviation IMU qui renvoie à la dénomination anglaise de « *Inertial Measurement Unit* ».

L'unité de mesure comporte ainsi des gyromètres et des accéléromètres permettant de mesurer les mouvements en rotation et en translation du détecteur 12. L'unité de mesure peut également comporter des magnétomètres.

Selon les cas, les données de sortie de l'unité de mesure de mouvement peuvent être des données brutes ou intégrées.

Par exemple, les données intégrées sont exprimées sous la forme d'une matrice de rotation R correspondant aux mouvements en rotation du détecteur 12 ou d'une matrice de translation T correspondant aux mouvements en translation du détecteur 12.

En variante, les données relatives à la rotation sont fournies à l'aide d'un quaternion qui est généralement un vecteur à quatre valeurs dont une valeur représente la norme, les autres valeurs étant normées et caractérisant la rotation dans l'espace.

Le détecteur 12 comprend une matrice 18 de pixels 20.

La matrice 18 est donc un ensemble de pixels 20 agencés selon des lignes 22 et des colonnes 24.

Les pixels 20 sont des pixels d'un imageur classique et non d'un capteur événementiel.

Les pixels 20 sont donc chacun un capteur intégrant temporellement la lumière reçue et délivrant un signal proportionnel au résultat de l'intégration temporelle de la lumière incidente sur le capteur du pixel 20.

Selon l'exemple de la figure 1, les pixels 20 sont des pixels de type CMOS, l'abréviation CMOS renvoyant à la dénomination anglaise de « *Complementary Metai Oxide Semiconductor* » signifiant littéralement métal-oxyde-semi-conducteurs complémentaires.

En outre, la matrice 18 peut être une matrice colorée, notamment une matrice de type RGB. Dans une telle matrice, certains pixels 20 donnent l'intensité lumineuse de la couleur rouge, d'autres de la couleur bleue et encore d'autres de la couleur verte. Pour cela, il est possible d'utiliser un filtre de Bayer.

Selon un exemple, l'unité de lecture 26 des pixels 20 est propre à lire les valeurs d'intensité de chacun des pixels 20.

Pour cela, à titre d'illustration, l'unité de lecture 26 utilisent des convertisseurs analogique-numériques généralement partagés pour un ensemble de pixels d'une même colonne. Alternativement, un convertisseur-numérique peut être prévu dans chaque pixel, bien que cela soit moins fréquent étant donné l'encombrement que cela représente au niveau de chaque pixel.

L'unité de lecture 26 est propre à produire une trame de données correspondant à une image, cette image étant constituée des valeurs lues pour tous les pixels de la matrice.

La transformation en trame est réalisée à une fréquence d'acquisition constante. Généralement, les pixels sont lus ligne par ligne, les pixels d'une même ligne étant lus en parallèle par des blocs de lecture placés en pieds de colonnes.

L'unité de lecture 26 fonctionne ainsi de manière synchrone puisque l'unité de lecture 26 est capable de générer un flux synchrone de trames, une trame étant émise par l'unité de lecture à ladite fréquence image.

Selon l'exemple de la figure 1, 4 pixels 20 voisins sont groupés pour former un ensemble partageant le même convertisseur analogique-numérique. L'ensemble des 4 pixels 20 est généralement appelé un macropixel.

Lorsque l'unité de lecture 26 vient lire les valeurs des pixels, elle effectue de préférence cette lecture en mode « global shutter » (terme anglais signifiant littéralement obturation globale), c'est-à-dire que l'ensemble des pixels présente une fenêtre d'intégration temporelle identique et que la sortie de chaque convertisseur analogique-numérique permet d'indiquer une valeur pour chaque pixel d'un macropixel correspondant à un « même instant » de relevé, même si les lectures ou autrement dit les relevés des valeurs présentes dans les pixels qui sont réalisées au moyen d'un convertisseur-analogique partagé peuvent être réalisées séquentiellement au fur et à mesure de la construction d'une trame correspondant à une image.

Bien entendu, la valeur de 4 pixels 20 n'est pas limitative et il est possible de considérer des macropixels avec un nombre différent de pixels 20. En outre, comme cela est connu en soi, il est possible que l'imageur ait différents modes de résolution, les pixels pouvant par exemple être tous lus indépendamment en haute résolution, ou moyennés au sein d'un macropixel pour sortir une unique valeur pour un macropixel pour une plus faible résolution.

Dans une variante où certains pixels 20 sont des pixels colorés, travailler avec des macropixels permet notamment de réaliser l'équivalent d'un pixel avec 4 pixels, ou « sous-pixels » présentant des filtres colorés différents. Ainsi, le macropixel de 4 pixels colorés différents permet de convertir plus aisément un pixel coloré en un niveau de gris pour faciliter la réception des données par la première chaîne de traitement 14. Cet effet est obtenu grâce à la proximité physique d'un pixel avec ses voisins, ce qui rend les informations plus aisément accessibles.

Dans l'exemple décrit, l'unité de lecture 26 présente une fréquence d'acquisition réglable, notamment comprise entre 5 Hertz (Hz) et 100 kiloHertz (kHz).

Il peut être indiqué ici que, selon la fréquence d'acquisition choisie, la durée d'intégration par pixel pourra éventuellement varier mais pas nécessairement, par exemple pour adapter la dynamique des plages de valeurs d'intensité pouvant être mesurées par le détecteur 12. La précision du convertisseur analogique-numérique pourra éventuellement être modulée pour permettre de modifier la fréquence d'acquisition, une fréquence élevée pouvant nécessiter de réduire la précision du convertisseur.

De préférence, pour assurer un fonctionnement rapide de la première chaîne de traitement 14, la fréquence d'acquisition est supérieure ou égale à 10 kHz.

En outre, selon un mode de réalisation, la précision de chaque convertisseur analogique-numérique est réglable.

Ainsi, lorsqu'une trame est destinée à la deuxième chaîne de traitement 16, la précision serait maximale alors que lorsqu'une trame est destinée à la première unité de traitement 14, une précision moindre pourrait être suffisante. Modifier la précision peut permettre d'augmenter la fréquence d'acquisition pour la première chaîne de traitement 14 et donc de maintenir les propriétés de grande dynamique de la première chaîne de traitement 14.

Dans un tel cas, l'unité de lecture 26 présente deux fréquences d'acquisition différentes, une première fréquence d'acquisition $f_{ACQ\,1}$ pour la première chaîne de traitement 14 et une deuxième fréquence d'acquisition $f_{ACQ\,2}$ pour la deuxième chaîne de traitement 16. La première fréquence d'acquisition $f_{ACQ\,1}$ est supérieure à la deuxième fréquence d'acquisition $f_{ACQ\,2}$, de préférence supérieure à 10 fois la deuxième fréquence d'acquisition $f_{ACQ\,2}$.

La première fréquence d'acquisition $f_{ACQ\,1}$ est par exemple supérieure à 100 Hz alors que la deuxième fréquence d'acquisition $f_{ACQ\,2}$ est inférieure à 10 Hz.

La première chaîne de traitement 14 est positionnée en sortie du détecteur 12.

La première unité de réception 30 est ainsi propre à recevoir le flux synchrone de trames de la matrice 18 de pixels 20.

La première chaîne de traitement 14 est propre à traiter le flux synchrone de trames pour obtenir des premières données.

Comme cela sera détaillé dans ce qui suit, les premières données sont des données relatives à l'évolution temporelle d'au moins un objet de la scène imagée par le détecteur 12.

D'un point de vue fonctionnel, la première chaîne de traitement 14 comporte une première unité de réception 30 et une première unité de traitement 32.

La première unité de traitement 32 comporte un premier bloc de conversion 34 et un premier bloc de calcul 36.

Le premier bloc de conversion 34 est propre à convertir le flux synchrone de trames provenant du détecteur 12 en un flux événementiel.

Autrement formulé, le premier bloc de conversion 34 est capable de convertir un flux d'images classiques acquis à relativement grande vitesse, c'est-à-dire un ensemble de trames sur un intervalle de temps, en données événementielles sur le même intervalle de temps. Un tel intervalle de temps peut être qualifié d'intervalle de temps d'observation.

Le temps d'observation est bien supérieur à la première durée d'acquisition, la première durée d'acquisition étant l'inverse de la première fréquence d'acquisition $f_{ACQ\,1}$. Il en résulte que plusieurs trames sont émises par l'unité de lecture 26 durant ce temps d'observation.

Par ailleurs, il peut être noté que le temps d'observation est bien différent du temps d'intégration du détecteur 12.

Selon un mode de réalisation simple, la conversion par le premier bloc de conversion 34 est mise en oeuvre comme suit.

Une trame d'intensité lumineuse est reçue. La trame d'intensité lumineuse correspond à une mesure à un instant t.

Le premier bloc de conversion 34 calcule alors, pour chaque pixel, 20 la différence relative entre la valeur d'intensité lumineuse $I_{curr}$ de la trame d'intensité reçue et la valeur d'intensité lumineuse $I_{prev}$ d'une trame antérieure correspondant à une mesure à l'instant immédiatement précédent. La valeur d'intensité lumineuse de chaque pixel de la trame antérieure est stockée dans une mémoire d'une première unité de traitement 32.

Le premier bloc de conversion 34 compare la valeur de la différence à un seuil de contraste $C_{th}$.

Lorsque la valeur de la différence est supérieure au seuil de contraste $C_{th}$, un événement est généré. L'événement est généré sous forme d'une impulsion pour le pixel considéré. Une telle impulsion est souvent usuellement dénommée « *spike* » en référence à la terminologie anglaise correspondante.

En outre, la valeur d'intensité lumineuse stockée dans la mémoire pour le pixel à l'origine de l'impulsion est mise à jour avec la valeur d'intensité lumineuse $I_{curr}$ de la trame d'intensité reçue.

Lorsque la valeur de la différence est inférieure au seuil de contraste $C_{th}$, aucun événement n'est généré pour ce pixel et la valeur d'intensité lumineuse stockée dans la mémoire n'est pas modifiée pour ce pixel.

La génération d'une impulsion pour un pixel 20 par le premier bloc de conversion 34 n'a donc lieu que si la condition sur la différence entre les deux valeurs d'intensité lumineuse est remplie.

On notera que le procédé décrit ci-dessus réalise une forme d'intégration des différences d'intensité entre deux instants successifs. C'est uniquement quand la somme de ces différences dépasse un seuil qu'un événement est généré, puis suivi d'une réinitialisation de l'opération d'intégration. D'autres procédés d'intégration de l'intensité d'un pixel avec réinitialisation lors de l'émission d'un événement peuvent être mis en oeuvre par l'unité de conversion 34. L'exemple susmentionné avec une mémoire de taille équivalente à celle de la matrice de pixels est un mode de mise en oeuvre particulièrement compact et efficace.

En variante, d'autre conditions peuvent être utilisées.

Par exemple, la condition est la suivante :

$$\frac{I_{curr} - I_{prev}}{I_{prev}} \geq C_{th}$$

Selon une autre variante, la condition utilise un logarithme comme suit :

$$log\left(\frac{I_{curr} - I_{prev}}{I_{prev}}\right) \geq C_{th}$$

Néanmoins, dans chacun des cas, la génération d'impulsion n'a lieu que si la condition (ou les conditions dans certains cas) est remplie pour garantir un fonctionnement à haute cadence de la première unité de traitement 32.

Du fait que la génération d'événements a lieu dans le premier bloc de conversion 34, les données événementielles peuvent être considérées comme des données événementielles émulées au sens où ce ne sont pas des données d'un capteur événementiel. Ce sont des données d'un imageur classique transformées en données événementielles comme si les données provenaient d'un capteur événementiel.

Le premier bloc de conversion 34 est alors propre à transmettre les données événementielles ainsi générées au premier bloc de calcul 36.

Le format dans lequel les données événementielles sont transmises par le premier bloc de conversion 34 varie selon les modes de réalisation sans que cela n'affecte le fonctionnement du premier bloc de calcul 36.

Selon un premier exemple, une impulsion est souvent exprimée selon le protocole AER. Le sigle AER renvoie à la dénomination anglaise de « *Address Event Representation* » qui signifie littéralement représentation de l'adresse de l'événement.

Avec un tel formalisme, une impulsion est représentée sous la forme d'une pluralité de champs d'information.

Le premier champ d'information est l'adresse du pixel 20 qui a généré l'impulsion.

L'adresse du pixel 20 est, par exemple, encodée en donnant le numéro de ligne 22 et le numéro de colonne 24 de la matrice 18 de pixels où est situé le pixel 20 considéré.

En variante, un codage du type $y*x_{max} + x$ ou $x*y_{max} + y$ peut être utilisé. Dans la formule précédente, x désigne le numéro de la colonne 24 du pixel 20, y le numéro de la ligne 22 du pixel 20, $x_{max}$ le nombre de colonnes 24 et $y_{max}$ le nombre de lignes 22 de la matrice 18 de pixels 20.

Le deuxième champ d'information est l'instant de génération de l'impulsion par le pixel 20 qui a généré l'impulsion.

Cela implique que le premier bloc de conversion 34 est capable d'horodater la génération d'impulsions avec une bonne précision pour faciliter l'application des opérations du premier bloc d'opération aux flux d'événements généré.

Le troisième champ d'information est une valeur relative à l'impulsion.

Dans la suite, à titre d'exemple, le troisième champ d'information est la polarité de l'impulsion.

La polarité d'une impulsion est définie comme le signe du gradient d'intensité mesuré par le pixel 20 à l'instant de génération de l'impulsion.

Selon d'autres modes de réalisation, le troisième champ d'information est la valeur d'intensité lumineuse à l'instant de génération de l'impulsion, ou encore la valeur précise du gradient d'intensité mesuré.

En variante, la pluralité de champs d'information comporte uniquement le premier champ d'information et le deuxième champ d'information.

Selon un autre mode de réalisation, le flux d'événements asynchrone est représenté non sous la forme d'un flux d'impulsions donnant un identifiant de positionnement de chaque impulsion mais comme une succession de matrices creuses, c'est-à-dire des matrices principalement vides.

A titre d'exemple particulier, la matrice est une matrice dont chaque élément a trois valeurs possibles : une valeur nulle si aucune impulsion n'est présente, une valeur égale à 1 ou -1 si une impulsion est présente, le signe dépendant de la polarité de l'impulsion, c'est-à-dire du gradient d'intensité.

La matrice peut être transmise accompagnée d'un horodatage qui correspond à l'instant d'émission de cette matrice.

La matrice pourrait aussi encoder la valeur précise de l'instant « de lecture » correspondant au moment où a été mesuré la valeur d'intensité d'au moins un pixel ayant conduit à l'émission de l'impulsion ou « spike » (pour conserver une information plus précise que le simple instant d'émission de la matrice). On notera que, du fait du processus synchrone de traitement de l'unité de conversion 34, les quelques pixels susceptibles de délivrer un événement à un même instant ont tous le même instant de lecture.

Le premier bloc de calcul 36 est propre à calculer les premières données à partir du flux événementiel transmis par le premier bloc de conversion 34.

Pour cela, le premier bloc de calcul 36 applique une ou plusieurs opérations sur les données événementielles.

Les opérations peuvent varier fortement selon les premières données souhaitées pour l'application envisagée.

Selon l'exemple décrit sur la figure 1, un traitement effectué par le premier bloc de calcul 36 est d'obtenir des informations sur une région d'intérêt (plus souvent désigné par l'abréviation ROI qui renvoie à la dénomination anglaise correspondante de « *région of interest* ») à partir d'informations du mouvement propre du détecteur 12 pendant la période d'observation, pour obtenir des données compensées, ou modifiées en tenant compte du mouvement.

Les données compensées sont des données de type EMC. Le sigle EMC renvoie à la dénomination anglaise de « *Ego-Motion Compensation* » ou « *Ego-Motion Correction* » qui signifie littéralement compensation du mouvement propre ou correction du mouvement propre.

Dans une telle hypothèse, le premier bloc de calcul 36 comporte ainsi une sous-unité de compensation 38.

En outre, il convient que les coordonnées des pixels 20 soient calibrées. Une telle calibration ne correspond pas à la compensation du mouvement propre qui vient d'être décrite mais sert à corriger les distorsions géométriques induites par le système optique.

De ce fait, une représentation des données événementielles selon le protocole AER est préférable. Cela permet de simplifier la calibration de tous les événements du fait que cette opération devient réalisable dans le flux lui-même.

Toutefois, il serait également possible d'envisager de réaliser la calibration par un mécanisme de réadressage utilisant une table de correspondance (plus souvent désignée par l'acronyme LUT qui renvoie à la dénomination anglaise correspondante de « *Look-Up Table* »).

La sous-unité de compensation 38 prend ainsi en entrée le flux d'événements généré dont chaque événement est une impulsion caractérisée par les trois champs d'information.

La sous-unité de compensation 38 est par ailleurs propre à recevoir des mesures du mouvement du détecteur 12 pendant l'intervalle de temps d'observation.

Plus spécifiquement, la sous-unité de compensation 38 reçoit des données relatives au mouvement provenant de l'unité de mesure du mouvement.

La sous-unité de compensation 38 est également propre à appliquer une technique de compensation au flux d'événements généré en fonction des données de mouvement reçues pour obtenir un flux d'événements compensé dans l'intervalle de temps d'observation.

Selon l'exemple de la figure 1, la technique de compensation comporte une opération d'annulation de la distorsion introduite par le système optique en amont de la matrice 18 de pixels 20 suivie d'une opération de compensation du mouvement du détecteur 12.

Lors de l'opération d'annulation, le premier champ d'information relatif à la position d'un pixel est modifié en prenant en compte la distorsion.

Il est à noter que l'opération d'annulation peut être remplacée ou complétée par une opération de compensation partielle des aberrations optiques introduites par le système optique.

L'opération de compensation corrige la position des impulsions corrigées par l'opération d'annulation en fonction des mouvements du détecteur 12.

Par exemple, l'opération de compensation des mouvements du détecteur 12 comporte la mise en oeuvre de deux sous-opérations successives pour chaque impulsion.

Lors de la première sous-opération, il est déterminé la valeur de la matrice de rotation R et de la matrice de translation T à l'instant de génération de l'impulsion. Une telle détermination est, par exemple, mise en oeuvre par une interpolation, notamment entre les matrices de rotation R et les matrices de translation T connues les plus proches de l'instant de génération de l'impulsion.

La deuxième sous-opération consiste alors à multiplier les coordonnées obtenues en sortie de la première opération avec la matrice de rotation R et d'ajouter ensuite la matrice de de translation T pour obtenir les coordonnées de l'impulsion après prise en compte du mouvement propre du détecteur 12.

Le premier bloc de calcul 36 comporte aussi une sous-unité de reconstruction 40 de trames événementielles.

La sous-unité de reconstruction 40 est propre à générer des trames événementielles corrigées à partir du flux d'événements compensé dans l'intervalle de temps d'observation.

Une telle sous-unité de reconstruction 40 peut être nommée sous-unité EFG, le sigle EFG renvoyant à la dénomination anglaise de « *Event-Frame Generation* » qui signifie littéralement génération de trames événementielles.

La sous-unité de reconstruction 40 prend en entrée le flux d'événements compensé provenant de la sous-unité de compensation 38 et permet d'obtenir en sortie des trames événementielles reconstruites.

Dans les trames reconstruites, les objets qui ne bougent pas dans la scène observée par le système d'observation 10 apparaissent idéalement parfaitement - clairs et nets. A contrario, les objets qui se déplacent dans la scène observée apparaissent flous.

L'intensité flou apparent d'un objet dépend de plusieurs facteurs.

Un premier facteur est la vitesse de l'objet projetée sur le détecteur 12. Ce premier facteur dépend à la fois de la direction du mouvement de l'objet ainsi que de sa vitesse propre.

Un deuxième facteur est le temps d'observation d'une trame événementielle. Un tel paramètre de la sous-unité de reconstruction 40 peut être varié si besoin pour faire apparaître plus ou moins de flou apparent et donc d'objets en mouvement relatif par rapport au monde fixe.

Du fait que le temps d'observation est réglable, plusieurs vitesses projetées peuvent être corrigées. Par l'expression « vitesse projetée », il convient de comprendre ici la vitesse dans le référentiel du détecteur 12 ou encore la vitesse relative par rapport au détecteur 12. Une fois que la sous-unité de compensation 38 a effectué la technique de compensation, le paramètre de temps d'observation des trames peut être modifié sans avoir à recommencer l'application de la technique de compensation puisque les deux sous-unités (de compensation et de reconstruction) sont indépendantes.

En outre, reconstruire une trame événementielle dans un intervalle peut être réalisé par reconstruction de trames intermédiaires. A titre d'exemple, la reconstruction d'une trame avec un temps d'observation correspondant à un intervalle entre 0 et 20 milliseconde (ms) peut être obtenue en reconstruisant 4 trames de respectivement 5 ms, 10 ms, 15 ms et 20 ms sans repartir de 0 à chaque fois (c'est-à-dire effectuer 4 reconstructions aux 4 valeurs précédentes).

Pour chaque temps d'observation, les objets qui se déplacent avec une vitesse projetée dans un intervalle correspondant seront nets alors que les objets se déplaçant à une vitesse inférieure ou supérieure apparaîtront floues. Pour le cas de la durée la plus faible (5 ms dans l'exemple), ce sont les objets qui se déplacent relativement lentement par rapport au détecteur 12 qui sont nets tandis que les objets qui se déplacent rapidement apparaissent déjà flous.

Ainsi avec une telle technique, il est possible de détecter et accentuer le flou pour des objets d'une même scène se déplaçant à des vitesses différentes, et donc de détecter de nombreux objets et d'obtenir une indication sur leur vitesse.

Le premier bloc de calcul 36 comporte ensuite une sous-unité d'obtention 42.

La sous-unité d'obtention 42 est propre à déterminer une ou plusieurs caractéristiques dans chaque trame événementielle reconstruite.

Par exemple, la sous-unité d'obtention 42 est propre à déterminer, pour chaque événement du flux d'événements compensé, la nature mobile ou immobile d'un objet associé à l'événement.

Il est entendu par l'expression « objet associé à l'événement » que l'objet est l'objet de l'environnement ayant entraîné la génération émulée de l'événement par le premier bloc de conversion 34.

Les bords d'un objet immobile apparaissent avec un meilleur contraste que ceux d'un objet mobile puisque le flou de bouger dépend de la quantité de mouvement relative pendant le temps d'observation.

Ainsi, par exemple, la sous-unité d'obtention 42 cherche la valeur du contraste des bords de chaque objet, compare cette valeur à un seuil et considère que l'objet est immobile uniquement lorsque la valeur de contraste est supérieure ou égale au seuil.

Selon un autre mode de réalisation ou en combinaison, la sous-unité d'obtention 42 utilise le troisième champ d'information.

La sous-unité d'obtention 42 peut alternativement extraire les limites spatiales d'une région d'intérêt correspondant à l'ensemble des positions possibles d'un objet imagé par le système d'observation 10. A titre d'exemple particulier, la sous-unité d'obtention 42 pourrait alors fournir les coordonnées de quatre points formant un rectangle correspondant à la région d'intérêt.

De manière plus élaborée, la sous-unité d'obtention 42 est propre à déterminer d'autres caractéristique de la nature du mouvement de l'objet.

Notamment, la sous-unité d'obtention 42 peut déterminer si la nature du mouvement est principalement rotationnelle.

A titre d'exemple, les premières données sont alors les données de sorties de la sous-unité d'obtention 42.

D'autres traitements sont possibles pour la première unité de traitement 32.

Selon un autre mode de réalisation, la première unité de traitement 32 met en oeuvre un algorithme d'apprentissage automatique.

Un tel algorithme est plus souvent désigné sous l'appellation de « machine learning » du fait de la terminologie anglaise correspondante.

Par exemple, l'algorithme est mis en oeuvre à partir d'un réseau de neurones impulsionnel.

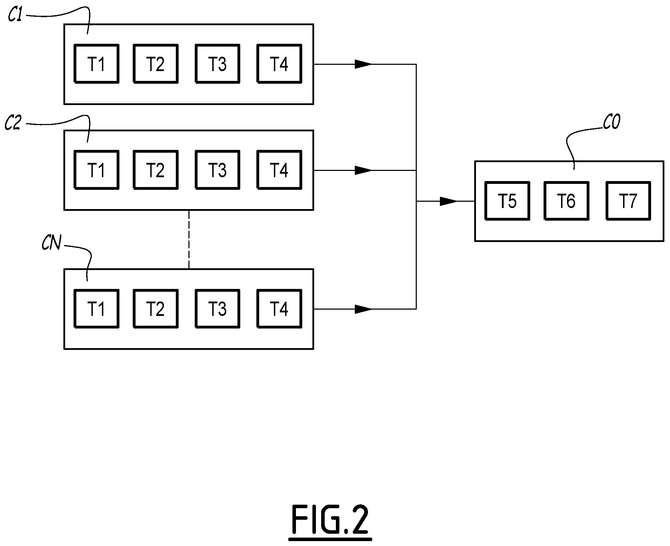

Une variante de réalisation de celle décrite précédemment en lien avec la figure 1 est décrite en référence à la figure 2. Selon cette variante, la première chaîne de traitement 14 peut être un coeur central C0 et un ensemble de coeurs de traitement C1 à CN, N étant le nombre de macropixels.

Chaque coeur de traitement C1 à CN est alors associé à un macropixel respectif, c'est-à-dire que chaque coeur prend en entrée la sortie d'un convertisseur analogique-numérique d'un macropixel.

En outre, les coeurs de traitement C1 à CN sont distribués spatialement pour se retrouver à proximité de leur macropixel respectif pour permettre un accès direct aux macropixels. Les coeurs de traitement C1 à CN ont ainsi un agencement spatial matriciel.

Un coeur de traitement C1 à CN peut alors s'interpréter comme une sous-chaîne de traitement d'un macropixel.

Il est alors possible d'envisager une architecture fonctionnelle de type SIMD. L'abréviation « SIMD » renvoie à la dénomination anglaise correspondante de « Single Instruction on Multiple Data » qui se traduit littéralement par l'expression « une seule instruction, des données multiples ».

En l'espèce, cela signifie que chaque coeur de traitement C1 à CN effectue les mêmes tâches.

Selon l'exemple de la figure 2, chaque coeur de traitement C1 à CN effectue quatre tâches T1 à T4.

La première tâche T1 consiste à obtenir un ensemble de valeurs des données du macropixel. Cela correspond à la tâche accomplie par la première unité de réception 30.

La deuxième tâche T2 est de convertir l'ensemble des valeurs reçues en des impulsions, ce qui correspond à la tâche réalisée par le premier bloc de conversion 34.

La troisième tâche T3 consiste à effectuer les traitements sur les impulsions générées. Ceci correspond à la tâche réalisée par le premier bloc de calcul 36.

La quatrième tâche T4 est d'envoyer la valeur traitée à destination du coeur central.

Le coeur central C0 met en oeuvre alors trois tâches T5 à T7.

La cinquième tâche T5 consiste à récolter l'ensemble des valeurs calculées par chaque coeur, la sixième tâche T6 est de combiner l'ensemble des valeurs collectées et la septième tâche T7 est d'envoyer chaque valeur combinée (correspondant aux premières données) à destination de la deuxième chaîne de traitement 16 selon l'exemple de la figure 1.

Comme chaque coeur de traitement C1 à CN peut fonctionner en parallèle, il en résulte un traitement accéléré pour la première chaîne de traitement 14.

Dans chacun des modes de réalisation précités, la première chaîne de traitement 14 envoie les premières données calculées à destination de la deuxième chaîne de traitement 16.

Du fait de la variété des traitements possibles, les premières données sont très différentes selon les modes de réalisation considérés. Quelques exemples sont donnés dans ce qui suit.

Selon un exemple, les premières données sont des données relatives à la présence d'objets dans une zone d'intérêt.

Selon encore un autre exemple particulier, les premières données sont des données évaluant le flou de mouvement sur des trames d'événements avec un mouvement compensé.

Les premières données peuvent également caractériser la nature immobile ou mobile d'un objet de la scène.

En variante, des données impliquant des traitements ultérieurs à la détermination de la nature mobile ou immobile peuvent être intéressantes.

Par exemple, les premières données sont toutes les positions occupées par un objet en mouvement dans l'espace. Cela permet d'obtenir une région d'intérêt dans lequel l'objet se trouve durant l'intervalle d'observation.

Il peut également être envisagé de caractériser la nature du mouvement, par exemple s'il s'agit d'un mouvement de rotation ou de translation.

Pour un objet immobile, les premières données caractériseront son contour, par exemple, une caractéristique d'un bord de l'objet peut alors être une première donnée. On peut envisager que la première donnée soit la position de ce bord ou la dimension du bord.

Les exemples précités correspondent ainsi à la nature du mouvement d'un objet, de données relatives aux extractions de contour ou à la présence ou non d'un objet.

Le premier bloc de calcul 36 est propre à émettre les premières données à une première fréquence d'émission $f_{\text{émission 1}}$.

Il peut être ainsi compris ici que le premier bloc de calcul 36 présente en sortie un fonctionnement qui peut être qualifié de synchrone au sens où l'émission des premières données est synchrone d'une horloge présentant la fréquence d'émission $f_{\text{émission 1}}$.

La première fréquence d'émission $f_{\text{émission 1}}$ est adaptée au type de donnée fournie par la première chaîne de traitement 14. La première fréquence peut être relativement rapide, typiquement comprise entre 100 Hz et 1 MégaHertz (MHz).

Une telle rapidité résulte au moins d'une fréquence d'exécution des traitements de la première chaîne de traitement 14 relativement rapide.

La deuxième chaîne de traitement 16 est propre à traiter des données reçues incluant le flux synchrone de trames classiques de la matrice 18 de pixels 20 et les premières données pour obtenir des deuxièmes données.

Les deuxièmes données sont des données de reconnaissance ou d'identification d'un objet de la scène observée par le système d'observation 10.

La deuxième chaîne de traitement 16 comporte une deuxième unité de traitement 46 recevant les données précitées, à savoir le flux synchrone d'images de la matrice 18 de pixels 20 et les premières données.

La deuxième unité de traitement 46 est également propre à obtenir des deuxièmes données relatives au flux synchrone en fonction des données qu'elle a reçues.

Pour cela, la deuxième unité de traitement 46 met en oeuvre une ou plusieurs opérations sur les données reçues.

Selon l'exemple décrit, la deuxième unité de traitement 46 met en oeuvre une technique d'évaluation de la position du détecteur 12.

A titre d'illustration, la technique d'évaluation mise en oeuvre par la deuxième unité de traitement 46 est une technique de localisation et de cartographie simultanée. La technique de localisation et de cartographie simultanée est plus souvent désignée sous l'acronyme SLAM qui renvoie à la dénomination « *Simultaneous Localisation and Mapping* ».

Selon l'exemple décrit, la technique SLAM mise en oeuvre par la deuxième unité de traitement 46 comporte deux opérations.

La première opération est la mise en oeuvre d'une technique d'odométrie visuelle inertielle. La technique d'odométrie visuelle inertielle est plus souvent désignée sous l'acronyme VIO qui renvoie à la dénomination « *Visual Inertial Odometry* ».

La technique d'odométrie visuelle inertielle permet d'obtenir des positions évaluées du détecteur 12 dans l'intervalle de temps d'observation en utilisant les trames reconstituées.

La deuxième opération est une étape d'optimisation mathématique de toutes les positions évaluées avec le temps.

L'opération d'optimisation est parfois dénommée « *bundle ajustement* » (ajustement de faisceau littéralement) et consiste à minimiser une erreur qui va maintenant être décrite.

A partir des positions des images précédentes, une nouvelle image permet d'obtenir une nouvelle position en comparant les mouvements de points d'intérêts identifiés sur chaque image.

Une fois la position évaluée pour chaque image, il est possible d'évaluer la position tridimensionnelle de chacun des points identifiés sur chaque image.

Ces points dont la position tridimensionnelle est connue peuvent ensuite être reprojetés sur chaque image (en deux dimensions donc). Les points reprojetés ne seront pas exactement à l'endroit des points observés, d'où l'apparition d'une erreur entre la mesure et la projection théorique.

L'opération d'optimisation vise à minimiser cette erreur.

Pour ce faire, on transforme le système contenant les positions calculées de la caméra, les erreurs (distances) entre les coordonnées des points reprojetés et celles des points mesurés/observés, et le modèle de la caméra (distorsion notamment), en une équation matricielle.

On cherche ensuite l'ensemble des positions évaluées permettant de rendre l'équation matricielle nulle.

Les deuxièmes données sont alors des données de position de l'objet.

Ce sont des données de position impliquant une reconnaissance ou une identification d'un objet puisque la position de l'objet doit être défini. Typiquement, on donnera la position du centre de l'objet mais cela implique qu'il soit déterminé ce qui est un objet ou non. Cette dernière détermination pourrait, par exemple, être obtenue à l'aide d'un réseau de neurones.

Il convient de bien distinguer cette position du centre de l'objet de la position que pourrait fournir la première chaîne de traitement 14.

Ainsi, si l'objet est un animal se déplaçant, les données événementielles seront un ensemble de positions de celui-ci et la position déterminée par la première chaîne de traitement 14 sera le barycentre de l'ensemble des positions des données événementielles de cette zone. Toutefois, cette position déterminée n'est pas la position de l'animal.

Cela suppose en effet d'identifier précisément une portion d'une image comme représentant l'animal et après cette identification, d'en déterminer le centre. Il n'y aucune raison que les deux positions soient identiques.

En variante ou en complément, les deuxièmes données comprennent des éléments de reconnaissance de l'objet.

Pour reprendre l'exemple précédent, une deuxième donnée peut être que l'animal est un chat ou un chien.

La deuxième unité de traitement 46 est propre à émettre les deuxièmes données à une deuxième fréquence d'émission $f_{\text{émission }2}$.

La deuxième fréquence d'émission $f_{\text{émission }2}$ est relativement faible, typiquement comprise entre 1 Hz et 10 Hz. Cela correspond au fait que la deuxième unité de traitement 46 réalise des traitements prenant du temps pour être effectués. Ces traitements peuvent donc être qualifiés de lourds ou présentant une haute complexité calculatoire.

Le rapport entre la première fréquence d'émission $f_{\text{émission }1}$ et la deuxième fréquence d'émission $f_{\text{émission }2}$ est strictement supérieur à 1.

De préférence, le rapport entre la première fréquence d'émission $f_{\text{émission }1}$ et la deuxième fréquence d'émission $f_{\text{émission }2}$ est strictement supérieur à 10.

Le système d'observation 10 qui vient d'être décrit permet de bénéficier des avantages des imageurs traditionnels et des capteurs événementiels et notamment de la précision des traitements disponibles pour les imageurs traditionnels et de la haute cadence des traitements événementiels.

En outre, contrairement à une solution de fusion de plusieurs types de capteur, le présent système d'observation 10 permet qu'une seule calibration soit appliquée à la fois pour les données événementielles et les données traditionnelles synchrones. Cela procure à la fois un avantage en terme de complexité mais également en termes de précision du fait qu'un recalage en position entre deux capteurs d'imagerie n'est jamais parfait.

De plus, un tel système d'observation 10 permet de répartir les calculs de manière intelligente entre les deux chaînes de traitement 14 et 16 pour qu'une chaîne de traitement (la première) fonctionne de manière relativement rapide avec des traitements simples (voie « où ») alors que l'autre chaîne de traitement (la deuxième) fonctionne de manière relativement lente avec des traitements complexes (voie « quoi »). A titre d'exemple particulier, dans le domaine des données événementielles, la correction du flou de bouger est un problème de complexité linéaire, ce qui est plus simple que d'autres techniques de détermination du flou de mouvement.

En outre, la deuxième chaîne de traitement 16 bénéficie des résultats des traitements déjà effectués par la première chaîne de traitement 14, de sorte que les résultats de la deuxième chaîne de traitement 16 sont obtenus avec un gain en rapidité pour une précision donnée.

Au final, par rapport à d'autres systèmes d'observation, relativement peu de calculs supplémentaires sont à prévoir tout en permettant qu'uniquement les données utiles aux différents blocs soient transmises, ce qui limite le poids, l'encombrement et la puissance énergétique du système d'observation 10.

Grâce aux avantages précités, un tel système d'observation 10 est compatible avec une implémentation physique embarquée.

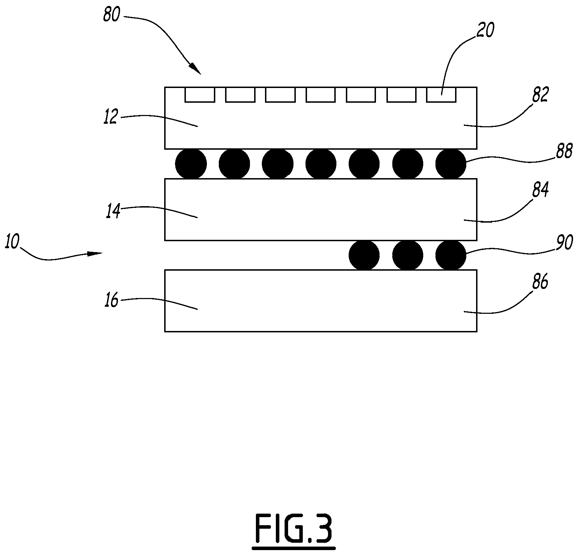

Un exemple d'une telle implémentation est maintenant décrit en référence à la figure 3.

Dans l'exemple illustré, le système d'observation 10 est un empilement 80 de trois couches 82, 84 et 86 le long d'une direction d'empilement.

Les couches 82, 84 et 86 sont superposées.

Le détecteur 12 est fabriqué dans la première couche 82.

Pour cela, une technique BSI est, par exemple, utilisée.

L'acronyme BSI renvoie à la terminologie anglaise de « *Backside Illumination* » signifiant littéralement illumination par l'arrière et désigne une technique de fabrication d'un capteur dans laquelle les photodiodes des pixels 20 sont positionnées en contact direct avec l'optique de collection qui leur est associée.

Dans la deuxième couche 84, la première chaîne de traitement 14 est réalisée sous la matrice 18 de pixels 20.

La deuxième couche 84 est reliée à la première couche 82 par des liaisons tridimensionnelles 88, ici de type cuivre-cuivre. Un tel type de liaison 88 est plus souvent dénommée « *3D bonding* » en référence à la terminologie anglaise correspondante.

La troisième couche 86 comprend la deuxième chaîne de traitement 16.

Selon l'exemple proposé, la troisième couche 86 est également reliée à la deuxième couche 84 par des liaisons tridimensionnelles 90.

Alternativement, il est possible d'envisager une liaison filaire avec la deuxième chaîne de traitement 16, en positionnant la troisième couche 86, non pas superposée aux deux autres 82 et 84, mais sur le côté, par exemple sur un dispositif d'accueil type circuit imprimé PCB (le sigle PCB renvoyant à la dénomination anglaise correspondante de « *printed circuit board* »).

Dans chacun des cas, la distance entre l'ensemble du détecteur 12 et de la première chaîne de traitement 14 doit être relativement faible et la connexion avec cet ensemble réalisée avec des interconnexions à haut débit et de préférence parallèles.

Le système d'observation 10 ainsi implémenté physiquement présente l'avantage d'être un système embarqué de faible encombrement.

De plus, le fait que le système d'observation 10 puisse fournir directement sa position et celle des objets autour le rend particulièrement facile à intégrer dans des systèmes embarqués complexes, où la gestion de flux de données et la planification des différentes tâches de traitement est source de congestion et problématique.

Selon d'autres modes de réalisation correspondant notamment à des applications dans lesquels l'implémentation matérielle est moins contrainte, l'implémentation physique des chaînes de traitement 14 et 16 est, par exemple, une implémentation informatique.

Dans chacun des cas, il peut être considéré que le procédé d'observation mis en oeuvre par le système d'observation 10 est un procédé mis en oeuvre par ordinateur.

Il a ainsi été montré que le système d'observation 10 permet de bénéficier des avantages des imageurs classiques et des capteurs événementiels tout en restant compatible avec une implémentation physique dans un système embarqué.

D'autres modes de réalisation du système d'observation 10 bénéficiant de ces avantages sont également envisageables.

Selon un mode de réalisation, le système d'observation 10 comporte une rétroaction depuis la deuxième chaîne de traitement 16 vers au moins l'un parmi le détecteur 12 et la première chaîne de traitement 14.

Par exemple, la rétroaction pourrait être utilisée pour adapter la fréquence de réception des données par la première unité de réception 30 et/ou la fréquence de conversion du premier bloc de conversion 34.

Cette adaptation pourrait être réalisée en temps réel, c'est-à-dire en fonctionnement du système d'observation 10.

Selon une variante, la rétroaction pourrait être utilisée pour fournir des données issues de la technique SLAM pour améliorer la mise en oeuvre de la technique de compensation de la sous-unité de compensation 38.

Selon un autre mode de réalisation, la deuxième chaîne de traitement 16 effectue également des prétraitements sur les trames issues du détecteur 12 pour faciliter les traitements ultérieurs.

Dans chacun des modes de réalisation présentés précédemment et qui peuvent être combinés entre eux pour former de nouveaux modes de réalisation lorsque cela est techniquement possible, il est proposé un système d'observation 10 permettant de mettre en oeuvre un procédé d'observation d'un environnement, le procédé comprenant une étape d'acquisition d'une scène d'un environnement par un détecteur 12 correspondant à un imageur traditionnel, une première étape de traitement de type asynchrone des données acquises pour obtenir des premières données, la première étape de traitement comprenant une conversion des données acquises en données événementielles et une deuxième étape de traitement de type synchrone sur les données acquises et tenant compte des premières données, la deuxième étape de traitement permettant d'obtenir des deuxièmes données.

Un tel procédé permet de bénéficier des avantages des imageurs classiques et des capteurs événementiels tout en restant compatible avec une implémentation physique dans un système embarqué.

Un tel dispositif ou procédé est donc particulièrement adapté pour toute application liée à la vision embarquée. Parmi ces applications, à titre non exhaustif, il peut être mentionné la surveillance, la réalité augmentée, la réalité virtuelle ou les systèmes de vision des véhicules autonomes ou des drones, voire même de la capture de mouvement embarquée.

**Revendications**

1. Système d'observation (10) d'un environnement, le système d'observation (10) comprenant :

   - un détecteur (12) comportant :

     - une matrice (18) de pixels (20), chaque pixel (20) étant un capteur propre à acquérir l'intensité de la lumière incidente lors d'une observation de l'environnement, et
     - une unité de lecture (26), l'unité de lecture (26) étant propre à lire les valeurs d'intensité des pixels (20) pour former un flux synchrone de trames,

   - une première chaîne de traitement (14) comportant :

     - une première unité de réception (30) propre à recevoir le flux synchrone du détecteur (12), et
     - une première unité de traitement (32) comprenant :

       - un premier bloc de conversion (34) propre à convertir le flux synchrone reçu par la première unité de réception (30) en données événementielles, et
       - un premier bloc de calcul (36) propre à calculer des premières données à partir des données événementielles,

   - une deuxième chaîne de traitement (16) distincte de la première chaîne de traitement (14) et comportant une deuxième unité de traitement (46) propre à recevoir un flux synchrone de trames issu de la matrice (18) de pixels (20) et les premières données et à obtenir des deuxièmes données relatives à l'environnement en fonction du flux synchrone et des premières données,

la première unité de traitement (32) comportant une sous-unité de compensation (38), la sous-unité de compensation (38) étant propre à recevoir des données relatives au mouvement du détecteur (12) et propre à appliquer une technique de compensation aux données événementielles convertis par le premier bloc de conversion (34) en fonction des données reçues pour obtenir un flux d'événements compensés,

la première unité de traitement (32) comportant également une sous-unité de reconstruction (40) de trames, la sous-unité de reconstruction (40) étant propre à générer des trames corrigées à partir du flux d'événements compensés, les premières données comportant les trames corrigées.

2. Système d'observation selon la revendication 1, dans lequel l'unité de lecture (26) présente une première fréquence d'acquisition ($f_{ACQ\ 1}$) pour la première chaîne de traitement (14) et une deuxième fréquence d'acquisition ($f_{ACQ\ 2}$) pour la deuxième chaîne de traitement (16), le rapport entre la première fréquence d'acquisition ($f_{ACQ\ 1}$) et la deuxième fréquence d'acquisition ($f_{ACQ\ 2}$) étant strictement supérieur à 1, de préférence strictement supérieur à 10.

3. Système d'observation selon la revendication 1 ou 2, dans lequel la première unité de traitement (32) est propre à émettre les premières données à une première fréquence d'émission ($f_{émission\ 1}$), la deuxième unité de traitement (46) est propre à émettre les deuxièmes données à une deuxième fréquence d'émission ($f_{émission\ 2}$), le rapport entre la première fréquence d'émission ($f_{émission\ 1}$) et la deuxième fréquence d'émission ($f_{émission\ 2}$) étant strictement supérieur à 1, de préférence strictement supérieur à 10.

4. Système d'observation selon l'une quelconque des revendications 1 à 3, dans lequel l'unité de lecture (26) présente une fréquence d'acquisition réglable.

5. Système d'observation selon l'une quelconque des revendications 1 à 4, dans lequel l'unité de lecture (26) présente des convertisseurs analogiques-numériques (28) présentant une précision réglable.

6. Système d'observation selon l'une quelconque des revendications 1 à 5, dans lequel les premières données sont des données relatives à l'évolution temporelle d'un objet de la scène.

7. Système d'observation selon l'une quelconque des revendications 1 à 6, dans lequel la première unité de traitement comporte, en outre, une sous-unité d'obtention (42), la sous-unité d'obtention (42) étant propre à obtenir au moins une caractéristique relative à la nature du mouvement d'un objet dans la scène, les premières données comportant l'au moins une caractéristique obtenue.

8. Système d'observation selon l'une quelconque des revendications 1 à 7, dans lequel les deuxièmes données sont des données de reconnaissance ou d'identification d'un objet de la scène.

9. Système d'observation selon l'une quelconque des revendications 1 à 8, dans lequel la deuxième unité de traitement (46) est propre à appliquer une technique d'évaluation aux premières et aux deuxièmes données pour obtenir des positions évaluées du détecteur (12).

10. Système d'observation selon la revendication 9, dans lequel la technique d'évaluation est une technique d'odométrie visuelle ou une technique de localisation et de cartographie simultanée.

11. Système d'observation selon l'une quelconque des revendications 1 à 10, dans lequel la deuxième unité de traitement (46) est propre à effectuer des prétraitements sur le flux synchrone.

12. Système d'observation selon l'une quelconque des revendications 1 à 10, dans lequel le premier bloc de calcul (36) effectue des prétraitements sur le flux synchrone pour obtenir un flux synchrone corrigé, les prétraitements pouvant notamment utiliser des premières données, la deuxième unité de traitement (46) étant propre à recevoir le flux synchrone corrigé.

13. Système d'observation selon l'une quelconque des revendications 1 à 12, dans lequel la première unité de traitement (32) comporte un ensemble de coeurs (C1, ..., CN), chaque coeur étant associé à un ensemble de pixels (20) respectifs et appliquant des traitements identiques sur ledit ensemble de pixels (20).

14. Système d'observation selon l'une quelconque des revendications 1 à 13, dans lequel le détecteur (12), la première unité de traitement (14) et la deuxième unité de traitement (16) font partie d'un même composant comportant un empilement (80) d'au moins trois couches (82, 84, 86), la première couche (82) de l'empilement (80) comportant le détecteur (12), la deuxième couche (84) de l'empilement (80) comportant la première unité de traitement (14) et la troisième couche (86) comportant la deuxième unité de traitement (16), la deuxième couche (84) étant reliée à la première couche (82) et à la troisième couche (86) par des liaisons tridimensionnelles (88, 90) respectives.

15. Procédé d'observation d'un environnement, le procédé d'observation étant mis en oeuvre par un système d'observation (10), le système d'observation (10) comprenant :

- un détecteur (12) comprenant une matrice (18) de pixels (20) et une unité de lecture (26),
- une première chaîne de traitement (14) comportant une première unité de réception (30) et une première unité de traitement (32) comprenant un premier bloc de conversion (34) et un premier bloc de calcul (36),
- une deuxième chaîne de traitement (16) distincte de la première chaîne de traitement (14) et comportant une deuxième unité de traitement (46),

la première unité de traitement (32) comportant une sous-unité de compensation (38), la sous-unité de compensation (38) étant propre à recevoir des données relatives au mouvement du détecteur (12) et propre à appliquer une technique de compensation aux données événementielles convertis par le premier bloc de conversion (34) en fonction des données reçues pour obtenir un flux d'événements compensés,
la première unité de traitement (32) comportant également une sous-unité de reconstruction (40) de trames, la sous-unité de reconstruction (40) étant propre à générer des trames corrigées à partir du flux d'événements compensés, les premières données comportant les trames corrigées, le procédé d'observation comprenant les étapes de :

- acquisition par chaque pixel de l'intensité de la lumière incidente sur le pixel lors d'une observation de l'environnement,
- lecture des valeurs d'intensité des pixels (20) par l'unité de lecture (26) pour former un flux synchrone de trames,
- réception par la première unité de réception (30) du flux synchrone du détecteur (12),
- conversion du flux synchrone reçu par le premier bloc de conversion (34) en données événementielles,
- calcul des premières données à partir des données événementielles par le premier bloc de calcul (36),

- réception par la deuxième unité de traitement (46) du flux synchrone du détecteur (12) et des premières données, et
- obtention de deuxièmes données relatives à l'environnement en fonction des données reçues par la deuxième unité de traitement (46).

FIG.1

EP 4 203 490 A1

FIG.2

EP 4 203 490 A1

## FIG.3

**RAPPORT DE RECHERCHE EUROPEENNE**

Europäisches
Patentamt
European
Patent Office
Office européen
des brevets

Numéro de la demande

EP 22 21 5273

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2007/222877 A1 (KURANE HARUHISA [JP]) 27 septembre 2007 (2007-09-27) * alinéas [0095] - [0097]; figure 2 * * alinéa [0121]; figure 6 * * alinéa [0109]; figure 4 * * alinéas [0123] - [0126]; figure 7 * * alinéa [0130]; figure 8 * * alinéas [0145] - [0147]; figure 11 * * alinéas [0157] - [0181]; figure 12 * ----- | 1-15 | INV. H04N25/00 H04N25/707 |
| A | US 2019/268532 A1 (IINUMA TAKAHIRO [JP]) 29 août 2019 (2019-08-29) * le document en entier * ----- | 1-15 | |

**DOMAINES TECHNIQUES RECHERCHES (IPC)**

H04N

Le présent rapport a été établi pour toutes les revendications

| Lieu de la recherche | Date d'achèvement de la recherche | Examinateur |
|---|---|---|
| Munich | 2 mai 2023 | Berne, Jean-François |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 21 5273

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-05-2023

| Document brevet cité au rapport de recherche | Date de publication | Membre(s) de la famille de brevet(s) | Date de publication |
|---|---|---|---|
| US 2007222877 A1 | 27-09-2007 | JP 4984915 B2 | 25-07-2012 |
| | | JP 2007295525 A | 08-11-2007 |
| | | US 2007222877 A1 | 27-09-2007 |
| US 2019268532 A1 | 29-08-2019 | CN 109328457 A | 12-02-2019 |
| | | EP 3493526 A1 | 05-06-2019 |
| | | JP 2018022935 A | 08-02-2018 |
| | | KR 20190029615 A | 20-03-2019 |
| | | US 2019268532 A1 | 29-08-2019 |
| | | WO 2018025465 A1 | 08-02-2018 |

EPO FORM P0460

Pour tout renseignement concernant cette annexe : voir Journal Officiel de l'Office européen des brevets, No.12/82